(19) Europäisches Patentamt
European Patent Office
Office européen des brevets

(11) **EP 1 843 925 B1**

(12) **EUROPÄISCHE PATENTSCHRIFT**

(45) Veröffentlichungstag und Bekanntmachung des Hinweises auf die Patenterteilung:
**21.08.2013 Patentblatt 2013/34**

(21) Anmeldenummer: 05826440.9

(22) Anmeldetag: **16.12.2005**

(51) Int Cl.:
***B60T 8/00*** *(2006.01)*      ***B60T 13/66*** *(2006.01)*

(86) Internationale Anmeldenummer:
**PCT/EP2005/056869**

(87) Internationale Veröffentlichungsnummer:
**WO 2006/076999 (27.07.2006 Gazette 2006/30)**

(54) **VERFAHREN FÜR DIE STEUERUNG EINES BREMSSYSTEMS EINES KRAFTFAHRZEUGES**

METHOD FOR CONTROLLING A BRAKING SYSTEM OF A MOTOR VEHICLE

PROCEDE POUR COMMANDER UN SYSTEME DE FREINAGE DE VEHICULE AUTOMOBILE

(84) Benannte Vertragsstaaten:
**DE FR**

(30) Priorität: **21.01.2005 DE 102005003159**

(43) Veröffentlichungstag der Anmeldung:
**17.10.2007 Patentblatt 2007/42**

(73) Patentinhaber: **Continental Teves AG & Co. oHG
60488 Frankfurt am Main (DE)**

(72) Erfinder:
• **JÄGER, Markus
 65760 Eschborn (DE)**
• **FÜHRER, Jochen
 64287 Darmstadt (DE)**
• **SCHMITT, Gregor
 93047 Regensburg (DE)**

(56) Entgegenhaltungen:
EP-A- 1 081 005   US-A- 3 621 929
US-A- 5 632 534   US-A- 5 923 093
US-A- 5 927 829

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren für die Steuerung eines Bremssystems, insbesondere für die Steuerung eines regenerativen Bremssystems mit einer Anzahl von Reibbremsen und einer elektrisch-regenerativen Bremse.

Der Zweck von regenerativen Bremssystemen bei Kraftfahrzeugen besteht darin, zumindest einen Teil der beim Bremsen aufgebrachten Energie im Fahrzeug zu speichern und für den Antrieb des Fahrzeuges wiederzuverwenden. Dadurch kann der Energieverbrauch des Fahrzeuges insgesamt gesenkt, der Wirkungsgrad erhöht und der Betrieb damit wirtschaftlicher gestaltet werden. Kraftfahrzeuge mit einem regenerativen Bremssystem weisen dazu in der Regel verschiedene Arten von Bremsen auf, die auch Bremsaktuatoren genannt werden.

Dabei werden in der Regel eine Anzahl hydraulischer Reibbremsen, wie sie aus gewöhnlichen Kraftfahrzeugen bekannt sind, und eine elektrisch-regenerative Bremse eingesetzt. Die elektrisch-regenerative Bremse ist in der Regel als elektrischer Generator ausgebildet, über den zumindest ein Teil der gesamten Bremsleistung aufgebracht wird. Die gewonnene elektrische Energie wird in ein Speichermedium wie beispielsweise eine Bordbatterie ein- bzw. zurückgespeist und für den Antrieb des Kraftfahrzeuges über einen geeigneten Antrieb wiederverwendet.

Regenerative Bremssysteme können als sogenannte serielle regenerative Konzepte ausgeführt werden, bei denen der Anteil des Bremsmomentes, der vom Generator aufgebracht wird, möglichst hoch ist. Dagegen sind auch parallele oder sogenannte Schleppmoment-basierte regenerative Konzepte bekannt, bei denen das Bremsmoment auf die Bremsaktuatoren oder auch einzelne Bremsen, beispielsweise achsweise, in vorbestimmten Verhältnissen aufgeteilt wird. Weiterhin sind Mischkonzepte dieser beiden Bremskonzepte bekannt. Allen Systemen gemeinsam ist, dass zumindest in einigen Bereichen des aufzubringenden Bremsmomentes mit mehreren unterschiedlichen Bremsen gleichzeitig gebremst wird, so dass sich die Gesamtverzögerung aus den Verzögerungsanteilen dieser Bremsen zusammensetzt.

Problematisch bei regenerativen Bremssystemen ist, dass bei der Verwendung unterschiedlicher Bremsaktuatoren trotz gleicher Bremskraftanforderungen die Systeme voneinander abweichende effektive Bremskräfte generieren können. Dies macht sich insbesondere bei Umverlagerungen der Bremsanforderungen von einem zum anderen Bremsaktuator negativ bemerkbar, wenn die Verzögerungsanteile der Bremsaktuatoren von einem vorgesehenen Verhältnis abweichen. Um diese Nachteile auszugleichen, ist es möglich, einen oder mehrere Bremsaktuatoren mit einem statischen Korrekturfaktor zu beaufschlagen. Allerdings können dadurch die Nachteile nicht vollständig beseitigt werden, da das Verhalten der Bremsaktuatoren fahrzeugspezifisch ist, weil beispielsweise die Bremsbeläge durch die Serienstreuung bei der Produktion unterschiedlich sein können. Darüber hinaus können sich die erreichbaren Verzögerungswerte der Bremsaktuatoren, wie insbesondere der hydraulischen Reibungsbremse, durch Verschleiß und Alterung ändern. Bei einem Austausch von sich abnutzenden Bremselementen, wie Bremsbelägen und Bremsscheiben, die bei Kraftfahrzeugen üblich sind, kann ein statischer Korrekturfaktor ebenfalls keinen Einfluss nehmen.

Aus der US 5632534 ist ein elektrisch betriebenes Fahrzeug mit einem Antriebssystem bekannt, das wenigstens einen Elektromotor aufweist, der durch eine elektronische Steuerungseinheit gesteuert und überwacht ist, um wenigstens ein Fahrzeugrad in einer Antriebsbetriebsart des Motors anzutreiben und um wahlweise einen Beitrag zum Gesamtbremsmoment beizutragen, wenn der Motor in einem Bremsbetrieb betrieben wird, und das auch ein hydraulisches Bremssystem umfasst, das durch den Fahrzeugführer betätigt wird und das auf wenigstens eines der Vorderräder des Fahrzeugs wirkt, wobei das hydraulische Bremsmoment, das durch den Fahrer durch das hydraulische Bremssystem erzeugt wird, in einer solchen Weise angepasst wird, dass zur Modulation des Gesamtbremsmomentes, das auf die Fahrzeugräder wirkt, die Veränderung des elektrischen Bremsmomentes so eingerichtet ist, dass es innerhalb des "regenerativen Bereichs" des Betriebes des Elektromotors bleibt, zumindest unter vorbestimmten Betriebsbedingungen des Fahrzeugs. Der Elektromotor, der zum Antrieb des Fahrzeugs verwendet wird, ist auch dazu eingerichtet, das Bremsmoment für die ABS-Bremsung zu modulieren, wodurch bei einem Auftreten von erheblichem Radschlupf das Elektromotormoment verringert wird. Hierbei kann das elektrische Bremsmoment vollständig entfernt und ein zusätzliches Antriebsmoment angelegt werden, um die von der Bremse erzeugte hydraulische Bremskraft zu überwinden, um eine ABS-Steuerung auch dann zuzulassen, wenn das hydraulische Bremsmoment allein das Radblockiermoment überschreitet. Vorzugsweise weist das hydraulische Bremssystem als Vorrichtung zum Einstellen des hydraulischen Bremsmomentes einen elektronisch gesteuerten hydraulischen Bremskraftverstärker auf, der ein veränderbares Verstärkungsverhältnis ermöglicht, das elektronisch auswählbar ist.

Der Erfindung liegt die Aufgabe zugrunde, ein Verfahren für die Steuerung eines oben beschriebenen Bremssystems anzugeben, bei dem die Istverzögerungsanteile der Bremsen der Gesamtverzögerung möglichst genau den Sollverzögerungsanteilen entsprechen.

Diese Aufgabe wird erfindungsgemäß gelöst durch das Verfahren gemäß Anspruch 1.

Die Erfindung geht von der Überlegung aus, dass die Istverzögerung von der Sollverzögerung der Bremsen eines Kraftfahrzeuges durch Verschleiß, Alterung und Erneuerung von Bremselementen wie beispielsweise Bremsbelägen im Verlauf voneinander abweicht. Um das Verhältnis der Verzögerungsanteile der Bremsen möglichst genau bei vorbestimmten Verhältnissen halten zu können, sollte diese Abweichung kontinuierlich erfasst werden, um über diese Erfassung der Abweichung die Bremsen nachregeln zu können. Die Erfassung dieser Abweichung und die Nachregelung sollte dynamisch erfolgen, weil die Abweichung der Bremsen durch die beschriebenen Einflussfaktoren fahrzeugspezifisch und kontinuierlich auftritt. Um dem Rechnung zu tragen, sollte die Erfassung der Abweichung zweckmäßigerweise im Fahrzeug selbst und ebenfalls wie die Veränderungen der Bremsen kontinuierlich erfolgen.

Die Erfindung geht weiterhin von der Überlegung aus, dass die Abweichung der Istverzögerungsanteile von den Sollverzögerungsanteilen der Bremsen bedingt ist durch eine Abweichung der Ist- von der Sollverzögerung der Bremsen. Daher kann die Abweichung am geeignetsten durch eine Ermittlung der Wirkungsgrade der Bremsen realisiert werden, die das Verhältnis von Ist- zu Sollverzögerung darstellen. Die Wirkungsgrade können über die Steuereinheit miteinander oder auch mit vorgegebenen Sollwirkungsgraden abgeglichen werden. Damit kann ein Korrekturwert für eine Anzahl der Bremsen ermittelt werden, mit dem die Sollverzögerung dieser Bremsen beaufschlagt wird. Durch die Beaufschlagung kann die Abweichung der Istverzögerung von der Sollverzögerung einer Anzahl von Bremsen ausgeglichen bzw. diese Bremsen nachgeregelt werden. Dabei ist es ausreichend, lediglich eine Anzahl von Bremsen durch eine Beaufschlagung nachzuregeln, weil lediglich das Verhältnis der Verzögerungsanteile einer Anzahl von Bremsen bedeutsam ist.

Um eine Anzahl von Bremsen mit einem Korrekturwert beaufschlagen zu können, wird die Sollverzögerung einer Anzahl von Bremsen mit einem Korrekturwert beaufschlagt, indem die Sollverzögerung mit diesem multipliziert oder durch diesen dividiert wird.

Bei Bremssystemen, das eine Bremskraftverteilung zwischen den Achsen ermöglicht, wird vorzugsweise ein Korrekturwert für eine Anzahl von Bremsen ermittelt, die jeweils einer gemeinsamen Achse zugeordnet sind. Dabei wird bei einem Kraftfahrzeug mit zwei Achsen für die Reibbremsen jeweils achsweise ein gemeinsamer Korrekturwert ermittelt und die Sollverzögerung der Reibbremsen mit diesem beaufschlagt.

Um einen Korrekturwert möglichst einfach zu ermitteln, wird vorzugsweise ein Wirkungsgrad einer Bremse als Referenz verwendet. Weil die gesamte Bremsverzögerung zentral nachgeregelt werden kann, ist es möglich, den Wirkungsgrad eines Bremse als Referenz für die Nachregelung anderer Bremsen zu verwenden, indem lediglich das Verhältnis der Sollverzögerungen verändert wird.

Vorteilhafterweise wird als Referenz für eine Anzahl von Bremsen, die einer gemeinsamen Achse zugeordnet sind, der Wirkungsgrad eines elektrischen Generators verwendet, weil dieser im Vergleich zu Reibbremsen kaum Verschleiß aufweist und sich so der Referenzbezug konstant halten lässt.

Um einen Wirkungsgrad einer Bremse als Referenz verwenden zu können, entspricht der Korrekturwert zweckmäßigerweise dem langfristigen Wirkungsgradverhältnis der Bremsen. Da einzelne Messungen teilweise sehr stark vom gleitenden Durchschnittswirkungsgrad abweichen können, ist es sinnvoll, mehrere Messungen vorzunehmen, also das langfristige Wirkungsgradverhältnis zu ermitteln.

Um dabei möglichst häufig auftretende Bremsvorgänge bzw. ähnliche Bremsvorgänge zu betrachten, wird ein Wirkungsgradverhältnis von Bremsen vorzugsweise in einem vorgegebenen Geschwindigkeitsbereich und/oder einem vorgegebenen Verzögerungsbereich gemessen. Besonders bevorzugt sind dabei Bremsungen aus mittleren und hohen Geschwindigkeitsbereichen bis zum Stillstand mit mittleren Verzögerungsbereichen, weil Messungen von Extremwerten zu große Abweichungen vom Durchschnittswert aufweisen können. Dabei bietet sich für die Messwertaufnahme ein Messbereich von unter 20 km/h und ein Verzögerungsbereich von 0,05 bis 0,3 g an. Dieses sollte lediglich bei "normalen" Bremsvorgängen, bei denen keine Sicherheitssysteme wie beispielsweise ein Anti-Blockiersystem (ABS) oder ein Elektrisches Stabilitäts- Programm (ESP) wirken, vorgenommen werden, um realistische Messwerte zu erhalten. Ebenfalls sollten bevorzugt Bremsvorgänge zur Messwertaufnahme verwendet werden, bei denen der Verzögerungswunsch während der Bremsung vergleichsweise wenig variiert wird.

Um äußere Einflussfaktoren bei der Ermittlung der Wirkungsgrade vernachlässigen zu können, wird ein Wirkungsgradverhältnis einer Anzahl von Bremsen vorteilhafterweise bei genau einer Bremsbetätigung ermittelt. Dabei ist davon auszugehen, dass die äußeren Einflüsse während des einen Bremsvorgangs vergleichsweise konstant bleiben. Für eine hohe Qualität der Messwerte der Wirkungsgrade weist der Bremsvorgang zweckmäßigerweise eine Anzahl von Messphasen auf, wobei der Verzögerungsanteil der Gesamtverzögerung jeweils einer Anzahl von Bremsen in jeweils einer Messphase über einem vorgegebenen Mindestanteil liegt. Auf diese Weise wird der Wirkungsgrad einer Anzahl von Bremsen jeweils genau in derjenigen Messphase ermittelt, in der ihr Verzögerungsanteil vergleichsweise hoch ist, wodurch sich die Messqualität erhöht.

Die für Berechnung des Wirkungsgrades benötigte jeweilige Istverzögerung wird vorzugsweise aus Raddrehzahlsignalen oder einem Verzögerungssensor ermittelt.

Bei einem Kraftfahrzeug mit zwei Achsen und einem elektrischen Generator wird ein Bremsvorgang zweckmäßigerweise in drei Messphasen aufgeteilt, wobei in einer ersten Phase der Wirkungsgrad des elektrischen Generators, in einer zweiten Phase der Wirkungsgrad der Reibbremsen der zweiten Achse und in einer dritten Phase der Wirkungsgrad der Reibbremsen der ersten Achse ermittelt wird. Dabei ist der elektrische Generator für einen hohen Wirkungsgrad nur mit der ersten Achse verbunden.

Für eine hohe Messqualität beträgt vorzugsweise der Mindestanteil des elektrischen Generators in der ersten

**EP 1 843 925 B1**

Phase etwa 0,95, in der zweiten Phase der Mindestanteil der Reibbremsen der zweiten Achse 0,15 und der Verzögerungsanteil der Reibbremsen der ersten Achse höchstens etwa 0,05 und in der dritten Messphase der Mindestanteil der Reibbremsen der ersten Achse etwa 0,5.

Für eine geeignete Berechnung der langfristigen Wirkungsgradverhältnisse wird vorteilhafterweise ein Korrekturwert mit einer Filterung von Messungen des Wirkungsgradverhältnisses einer Anzahl von Bremsen ermittelt. Zur Filterung sind dabei verschiedenste Rechenvorschriften wie beispielsweise die Bildung eines gleitenden Durchschnittes denkbar.

Für eine einfache Filterung der Messwerte, die gleichzeitig die Veränderungen der Wirkungsgrade einer Anzahl von Bremsen vergleichsweise schnell berücksichtigt, wird ein Korrekturwert nach jeder Messung des Wirkungsgradverhältnisses vorteilhafterweise um einen prozentuellen Anteil in Richtung des gemessenen Wirkungsgradverhältnisses korrigiert. Dabei können Veränderungen im Vergleich zur Durchschnittsbildung schneller erfolgen, indem ein Korrekturwert dynamisch nachgeführt wird. Ein Korrekturwert ändert sich also lediglich bei jeder neuen Messwertaufnahme des Wirkungsgradverhältnisses um einen prozentualen Anteil in Richtung des Messwertes, während er ansonsten konstant bleibt.

Bei Fahrzeugstillstand wird ein Korrekturwert vorzugsweise in der Steuereinheit des Bremssystems abgespeichert, so dass er bei jedem Zündungslauf des Kraftfahrzeuges als Startwert zur Verfügung steht.

Um zu vermeiden, dass eine Verschlechterung einer Bremse durch die Nachregelung für den Fahrer des Kraftfahrzeuges nicht mehr spürbar ist, wird ein Korrekturwert vorzugsweise durch einen Maximalwert begrenzt. Außerdem sollte ein Korrekturwert nur bis zur Höhe einer Verzögerungsanforderung beaufschlagt werden, in der noch Verlagerungen der Bremskraft von einer zur anderen Bremse bzw. zu einem anderen Bremsaktuator, stattfinden.

Die Sollverzögerung einer Anzahl von Bremsen wird zweckmäßigerweise ausschließlich in demjenigen Geschwindigkeitsbereich, in dem der Korrekturwert ermittelt wird, mit dem Korrekturwert und in den Randbereichen des Geschwindigkeitsbereichs mit einer sich dem Korrekturwert geschwindigkeitbereichswärts annähernden Rampenfunktion des Korrekturwertes beaufschlagt. Eine Beaufschlagung an den Randbereichen dieses Geschwindigkeitsbereiches mit einer Rampenfunktion des Korrekturwertes wird vorgenommen, um ein sprunghaftes An- oder Absteigen des Sollverzögerungswertes einer Bremse zu vermeiden.

Vorzugsweise weist ein Bremssystem eines Kraftfahrzeuges eine Anzahl von Bremsen, insbesondere eine Anzahl von Reibbremsen, eine elektrisch-regenerativen Bremse und eine Steuereinheit auf, wobei das Bremssystem über die Steuereinheit mit dem beschriebenen Verfahren steuerbar ist.

Die mit der Erfindung erzielten Vorteile bestehen insbesondere in der Möglichkeit, bei Bremssystemen mit einer Anzahl von Bremsaktuatoren, wie insbesondere einem regenerativen Bremssystem mit einer Anzahl von Reibbremsen und einer elektrisch-regenerativen Bremse, eine Anzahl von Bremsen derart nachzuregeln, dass die Istverzögerungsanteile der Bremsen über den Nutzungszeitraum der Bremsen annähernd den Sollverzögerungsanteilen der Bremsen entsprechen.

Ein weiterer Vorteil des Verfahrens ist, dass ein für die Nachregelung ermittelter Korrekturwert dynamisch nachgeführt wird, so dass eine Veränderung der Bremsen, wie Verschleiß, Alterung oder ein Austausch von Bremselementen, kontinuierlich in einer Aktualisierung des Korrekturwertes berücksichtigt wird. Ein weiterer Vorteil, der sich daraus ergibt, ist, dass das Verfahren fahrzeugspezifisch funktioniert, wobei die spezifischen Eigenschaften der Bremsen des Fahrzeuges berücksichtigt werden.

Durch die Nachregelung kann eine andauernde optimale Gesamtverzögerung des Kraftfahrzeuges während des Nutzungszeitraumes der Bremsen erreicht werden. Außerdem wird durch das konstante Einregeln des jeweiligen Verzögerungsanteilverhältnisses das Bremsgefühl des Fahrers insbesondere während genau einer Bremsung konstant und gleichmäßig gehalten.

Ein weiterer Vorteil besteht in der Möglichkeit, eine achsweise Nachregelung von Bremsen vornehmen zu können, so dass eine geeignete Bremskraftverteilung und ein achsweise unterschiedlicher Verschleiß von Reibbremsen berücksichtigt werden kann.

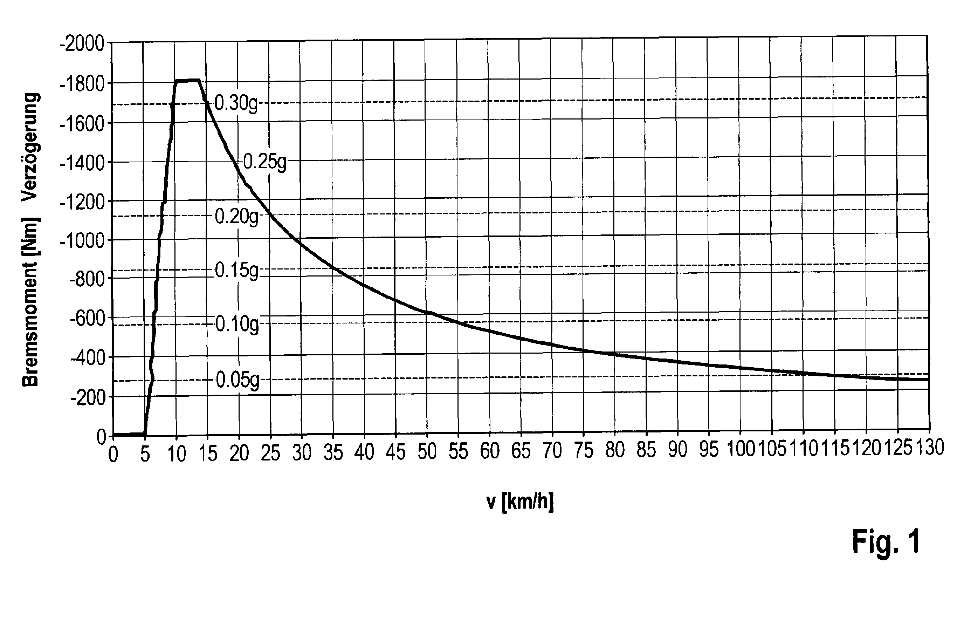

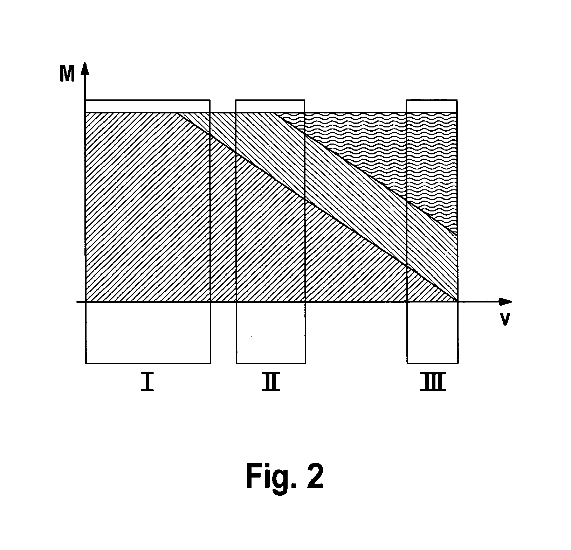

Ein Ausführungsbeispiel der Erfindung wird anhand der Figuren 1 und 2 näher erläutert. Darin zeigen:

Figur 1    das Bremsmoment einer elektrisch regenerativen Bremse eines Bremssystems eines Kraftfahrzeuges in Abhängigkeit von der Geschwindigkeit des Kraftfahrzeuges, und

Figur 2    die Bremsmomentverteilung von Bremsen bei einem Bremsvorgang, der drei Phasen in Abhängigkeit der Geschwindigkeit aufweist.

Die Erklärungen für die Abkürzungen in den Formeln sind der Bezugszeichenliste und der Auflistung der Indices zu entnehmen.

Um den Energieverbrauch eines Kraftfahrzeuges zu senken, weist dieses ein regeneratives Bremssystem auf. Dieses wiederum weist eine Anzahl hydraulischer Reibbremsen F und eine elektrisch regenerative Bremse auf, die als

4

elektrischer Generator R ausgeführt ist. Die im Generator R aufgebrachte Bremsenergie wird in einer Bordbatterie zwischengespeichert und zum Antrieb des Kraftfahrzeuges genutzt. Dabei wird das Kraftfahrzeug neben einem Verbrennungskraftmotor auch von dem elektrischen Generator R, der gleichzeitig neben der Generatorfunktion auch als Elektromotor betrieben werden kann, angetrieben, indem die in der Bordbatterie gespeicherte Energie in diesen zurückgeführt wird.

Für eine niedrige Reibung und damit einen hohen Wirkungsgrad des elektrischen Generators R ist dieser lediglich mit der vorderen Achse des Kraftfahrzeuges verbunden, während die vordere und hintere Achse jeweils zwei Reibbremsen F aufweisen.

Das maximale Generatorbremsmoment von Fahrzeugen mit regenerativer Bremse ist generatordrehzahl- und somit in der Regel auch fahrgeschwindigkeitsabhängig. Das Generatorbremsmoment kann je nach Fahrgeschwindigkeit und Verzögerungswunsch einen Wert zwischen 0% und 100% am Gesamtbremsmoment aufbringen.

Für eine hohe Gesamtverzögerung bei gleichzeitiger hoher Energiewiederverwertung wird das Verhältnis der Verzögerungsanteile der Reibbremsen F und dem Generator R der Gesamtverzögerung in Abhängigkeit der Geschwindigkeit geregelt. In Figur 1 ist das maximale Generatorbremsmoment des Generators R dargestellt. Wie aus der Figur zu erkennen ist, wird die gesamte Bremsenergie in dem Geschwindigkeitsbereich von 0 bis 5 km/h von den elektrischen Reibbremsen F und im Geschwindigkeitsbereich von 10 bis 20 km/h von dem Generator R aufgebracht. In den anderen Geschwindigkeitsbereichen wird der gesamte Zwischenraum der Verhältnisanteile durchfahren, wie ebenfalls aus Figur 1 hervorgeht.

Um dieses gewünschte Verzögerungsverhältnis des Generators R und der Reibbremsen F auch dann beibehalten zu können, wenn die Istverzögerung $a_{ist}$ von der Sollverzögerung $a_{soll}$ der Reibbremsen F aufgrund von Verschleißeffekten abweicht, werden die Reibbremsen F elektronisch über eine Steuereinheit nachgeregelt. Dabei wird die Bremskraftverteilung und unterschiedlichen Abnutzung der Reibbremsen F der beiden Achsen R berücksichtigt, indem die Reibbremsen F der vorderen und der hinten Achse jeweils achsweise individuell nachgeregelt werden.

Dazu wird die Sollverzögerung $a_{soll}$ der Reibbremsen F der vorderen Achse mit dem Korrekturwert $k_1$ und der Reibbremsen F der hinteren Achse mit dem Korrekturwert $k_2$ beaufschlagt. Die Korrekturwerte $k_1$ und $k_2$ werden dabei aus einer Anzahl von Wirkungsgradverhältnissen $k_{s1} = \dfrac{w_{F1}}{w_R}$ und $k_{s2} = \dfrac{w_{F2}}{w_R}$ der jeweiligen Reibbremsen F und des elektrischen Generators R gebildet.

Um bei der Ermittlung der Wirkungsgrade $w_R$, $w_{F1}$ und $w_{F2}$ äußere Einflussfaktoren vernachlässigen zu können, werden die Wirkungsgrade $w_R$, $w_{F1}$ und $w_{F2}$ während eines gemeinsamen Bremsvorganges gemessen.

Dieser Bremsvorgang weist, wie aus Figur 2 hervorgeht, drei geschwindigkeitsabhängige Messphasen I, II und III auf. Dabei sind die drei Messphasen derart im Geschwindigkeitsbereich eines Bremsvorganges angeordnet, dass das Bremsmoment des Generators R, das der Reibbremsen F der vorderen Achse und das der Reibbremsen F der hinteren Achse jeweils einen wählbaren Mindestanteil am Gesamtbremsmoment in einer ausgewählten Messphase aufweist. Dabei wird in den Messphasen I, II und III jeweils der Wirkungsgrad $w_R$, $w_{F1}$ und $w_{F2}$ derjenigen Bremsen gemessen, deren Bremsmomentanteil über dem individuellen Mindestanteil liegt bzw. in dieser Messphase vergleichsweise hoch ist. In Figur 2 zeigt der von links unten nach rechts oben schraffierte Bereich den Bremsmomentanteil des elektrischen Generators R, der von links oben nach rechts unten schraffierte Bereich den Bremsmomentanteil der Reibbremsen F der vorderen Achse und der gewellte Bereich den Bremsmomentanteil der Reibbremsen F der hinteren Achse.

In der ersten Messphase I wird daher der Wirkungsgrad $w_R$ des elektrischen Generators R, in der zweiten Phase II der Wirkungsgrad $w_{F2}$ der Reibbremsen F der hinteren Achse und in der dritten Phase III der Wirkungsgrad $w_{F1}$ der Reibbremsen F der vorderen Achse ermittelt.

Der Mindestanteil des elektrischen Generators R in der ersten Phase I beträgt dafür etwa 0,95, in der zweiten Phase II der Mindestanteil der Reibbremsen F der hinteren Achse etwa 0,15 und in der dritten Messphase der Mindestanteil der Reibbremsen der vorderen Achse etwa 0,5. Der Verzögerungsanteil der Reibbremsen F der vorderen Achse in Messphase II sollte dabei höchstens etwa 0,05 betragen.

Um qualitativ hochwertige und reproduzierbare Messwerte zu erhalten, werden ausschließlich Bremsvorgänge aus über 20 km/h , Bremsvorgänge mit einer Verzögerung zwischen 0,05 und 0,3 g und Bremsvorgänge, bei denen die Variation des Verzögerungswunsches während des Bremsvorgangs vergleichsweise klein ist, betrachtet.

Die Istverzögerung $a_{ist}$ in Messphase I beträgt

$$a_{ist}^{I} = w_R \cdot a_{soll,R}^{I} + w_{F1} \cdot a_{soll,F1}^{I} + w_{F2} \cdot a_{soll,F2}^{I} \, ,$$

in Messphase II

$$a_{ist}^{II} = w_R \cdot a_{soll,R}^{II} + w_{F1} \cdot a_{soll,F1}^{II} + w_{F2} \cdot a_{soll,F2}^{II}$$

und in Messphase III

$$a_{ist}^{III} = w_R \cdot a_{soll,R}^{III} + w_{F1} \cdot a_{soll,F1}^{III} + w_{F2} \cdot a_{soll,F2}^{III} \ .$$

Die Wirkungsgrade $w_R$, $w_{F1}$ und $w_F$ werden aus einem Gleichungssystem dieser drei Gleichungen über die Steuereinheit berechnet.

Als Korrekturwert $k_1$ und $k_2$ wird nicht $k_{s1}$ oder $k_{s2}$, sondern ein über einen längeren Zeitraum gemittelter Wert von $k_{s1}$ und $k_{s}$ verwendet. Damit $k_1$ und $k_2$ nicht zu stark schwanken, gleichzeitig aber trotzdem schnell Veränderungen der Reibbremsen F berücksichtigt werden, werden $k_1$ und $k_2$ dynamisch nachgeführt, indem $k_1$ und $k_2$ bei jeder Messung von $k_{s1}$ und $k_{s2}$ um einen Anteil von 0,01 von $k_1$ und $k_2$ in Richtung von $k_{s1}$ bzw $k_{s2}$ verändert werden. Dabei werden $k_1$ und $k_2$ in der Steuereinheit abgespeichert, so dass $k_1$ und $k_2$ bei jedem Zündungslauf des Kraftfahrzeuges als Startwert zur Verfügung stehen.

Um auf die Sollverzögerungen $a_{soll,F1}$ und $a_{soll,F2}$ der Reibbremse F die Korrekturwerte $k_1$ und $k_2$ zu beaufschlagen, werden die Sollverzögerung $a_{soll,F1}$ und $a_{soll,F2}$ der Reibbremse F zur Ermittlung von korrigierten Sollwerten

$a_{soll,F1}^{*}$ und $a_{soll,F2}^{*}$ mit dem Kehrwert von $k_1$ und $k_2$ multipliziert:

$$a_{soll,F1}^{*} = a_{soll,F1} \cdot \frac{1}{k_1} \ , \quad a_{soll,F2}^{*} = a_{soll,F2} \cdot \frac{1}{k_2}$$

Durch diese Rechenoperation wird der Wirkungsgrad $w_R$ des elektrischen Generators R als Referenz für die Nachregelung der Reibbremsen F verwendet.

Um die Reibbremsen F nicht falsch bzw. zu stark nachzuregeln, wird die Beaufschlagung der Sollverzögerungen $a_{soll,F1}$ und $a_{soll,F2}$ mit den Korrekturfaktoren $k_1$ und $k_2$ nur in den Arbeitsbereichen vorgenommen, indem die Korrekturwerte $k_1$ und $k_2$ ermittelt werden, also unter 20km/h. Um dabei eine sprunghafte Änderung des Bremsverzögerungsverhältnisses der Reibbremse F und des elektrischen Generators R zu vermeiden, wird in dem Bereich von 25 nach 15 km/h eine Beaufschlagung der Sollverzögerungen $a_{soll,F1}$ und $a_{soll,F2}$ der Reibbremsen F mit einer Rampenfunktion der Korrekturwerter $k_1$ und $k_2$ vorgenommen. Dabei nähern sich die Beaufschlagungswerte langsam $k_1$ und $k_2$ an, bis diese bei 15 km/h erreicht sind.

**Bezugszeichenliste**

$a_{soll}$　　Sollverzögerung

$a_{soll}^{*}$　　korrigierte Sollverzögerung

$a_{ist}$　　Istverzögerung

$k_s$　　Wirkungsgradverhältnis
k　　Korrekturwert
w　　Wirkungsgrad

F　　Reibbremse

R    Generator

I    erste Messphase
II   zweite Messphase
III   dritte Messphase

**Indices**

1    vordere Achse
2    hintere Achse

**Patentansprüche**

1. Verfahren für die Steuerung eines Bremssystems eines Kraftfahrzeuges, das einen elektrischen Generator (R) und eine Anzahl von Reibbremsen (F) aufweist, die Achsen des Kraftfahrzeuges zugeordnet sind, und dessen Gesamtverzögerung sich aus Verzögerungsanteilen des elektrischen Generators (R) und den Reibbremsen (F) zusammensetzt, wobei über eine Steuereinrichtung das Verhältnis der Sollverzögerungsanteile einer Anzahl von Bremsen (R, F) zueinander verändert wird, indem aus den Wirkungsgraden w einer Anzahl von Bremsen, die das Verhältnis von Istverzögerung ($a_{ist}$) zu Sollverzögerung ($a_{soll}$) darstellt, ein Korrekturwert ($k_1$, $k_2$) für eine Anzahl der Bremsen ermittelt wird, mit dem die Sollverzögerung ($a_{soll}$) dieser Bremsen beaufschlagt wird, **dadurch gekennzeichnet, dass** jeweils ein Korrekturwert ($k_1$, $k_2$) für Bremsen, insbesondere Reibbremsen (F), ermittelt wird, die jeweils einer gemeinsamen Achse zugeordnet sind, wobei die Sollverzögerung ($a_{soll}$) einer Anzahl von Bremsen (R, F) mit dem Korrekturwert (k) beaufschlagt wird, indem die Sollverzögerung ($a_{soll}$) mit diesem multipliziert oder dividiert wird.

2. Verfahren nach Anspruch 1, bei dem der wirkungsgrad (w) einer Bremse, insbesondere der Wirkungsgrad (w) eines elektrischen Generators (R), als Referenz für die Ermittlung eines Korrekturwertes ($k_1$, $k_2$) für eine Anzahl anderer Bremsen (F) verwendet wird.

3. Verfahren nach Anspruch 2, wobei der Wirkungsgrad ($w_R$) eines elektrischen Generators (R) als Referenz für die Ermittlung eines Korrekturwertes ($k_1$, $k_2$) für eine Anzahl von Reibbremsen (F) verwendet wird, die einer gemeinsamen Achse zugeordnet sind.

4. Verfahren nach einem der Ansprüche 1 bis 3, bei dem ein Korrekturwert ($k_1$, $k_2$) dem langfristigen Wirkungsgradverhältnis einer Anzahl von Bremsen (R, F) entspricht.

5. Verfahren nach einem der Ansprüche 1 bis 4, bei dem ein Korrekturwert ($k_1$, $k_2$) aus einer Filterung von Messungen des wirkungsgradverhältnisses ($k_{s1}$, $k_{s2}$) einer Anzahl von Bremsen (R, F)ermittelt wird.

6. Verfahren nach einem der Ansprüche 1 bis 5, bei dem ein Wirkungsgradverhältnis ($k_{s1}$, $k_{s2}$) einer Anzahl von Bremsen (R, F) in einem vorgegebenen Geschwindigkeitsbereich und/oder einem vorgegebenen Verzögerungsbereich gemessen wird.

7. Verfahren nach einem der Ansprüche 1 bis 6, bei dem ein Wirkungsgradverhältnis ($k_{s1}$, $k_{s2}$) einer Anzahl von Bremsen bei genau einer Bremsbetätigung ermittelt wird und der Bremsvorgang eine Anzahl von Messphasen (I, II, III) aufweist, wobei der Verzögerungsanteil der Gesamtverzögerung jeweils einer Anzahl von Bremsen in jeweils einer Messphase über einem vorgegebenen Mindestanteil liegt.

8. Verfahren nach einem der Ansprüche 1 bis 7, bei dem ein Wirkungsgradverhältnis einer ersten Achse $\left( k_{s1} = \dfrac{w_{F1}}{w_R} \right)$ und eine Wirkungsgradverhältnis $\left( k_{s2} = \dfrac{w_{F2}}{w_R} \right)$ einer zweiten Achse berechnet wird, indem die Wirkungsgrade ($w_R$, $w_{F1}$, $w_{F2}$) aus dem Gleichungssystem

$$a_{ist}^{I} = w_R \cdot a_{soll,R}^{I} + w_{F1} \cdot a_{soll,F1}^{I} + w_{F2} \cdot a_{soll,F2}^{I},$$

$$a_{ist}^{II} = w_R \cdot a_{soll,R}^{II} + w_{F1} \cdot a_{soll,F1}^{II} + w_{F2} \cdot a_{soll,F2}^{II},$$

$$a_{ist}^{III} = w_R \cdot a_{soll,R}^{III} + w_{F1} \cdot a_{soll,F1}^{III} + w_{F2} \cdot a_{soll,F2}^{III}$$

berechnet werden, wobei

$a_{ist}$ der Istverzögerung des Bremssystems,
$a_{soll,R}$ der Sollverzögerung ($a_{soll}$) des elektrischen Generators (R),
$a_{soll,F1}$ der Sollverzögerung ($a_{soll}$) der Reibbremsen (F) der ersten Achse,
$a_{soll,F2}$ der Sollverzögerung ($a_{soll}$) der Reibbremsen (F) der zweiten Achse,
$w_{F1}$ dem Wirkungsgrad der Reibbremsen (F) der ersten Achse
$w_{F2}$ dem Wirkungsgrad der Reibbremsen (F) der zweiten Achse
$w_R$ dem Wirkungsgrad des elektrischen Generators (R)

bei den Messphasen I, II und III entspricht und der elektrische Generator (F) mit der ersten oder der zweiten Achse verbunden ist.

**9.** Verfahren nach Anspruch 7 und 8, bei dem in einer ersten Messphase (I) der Mindestanteil des elektrischen Generators (R) etwa 0,95, in einer zweiten Messphase (II) der Mindestanteil der Reibbremsen (F) der zweiten Achse 0,15 und der Verzögerungsanteil der Reibbremsen (F) der ersten Achse höchstens etwa 0,05 und in einer drittem Messphase (III) der Mindestanteil der Reibbremsen (F) der ersten Achse etwa 0,5 beträgt, wobei der elektrische Generator (R) mit der ersten Achse verbunden ist.

**10.** Verfahren nach einem der Ansprüche 1 bis 9, bei dem ein Korrekturwert ($k_1$, $k_2$) nach jeder Messung des wirkungsgradverhältnisses ($k_{s1}$, $k_{s2}$) um einen prozentuellen Anteil in Richtung des gemessenen Wirkungsgradverhältnisses ($k_{s1}$, $k_{s2}$) korrigiert wird.

**11.** Verfahren nach einem der Ansprüche 1 bis 10, bei dem eine Anzahl von Korrekturwerten ($k_1$, $k_2$) in der Steuereinheit des Bremssystems abgespeichert werden.

**12.** Verfahren nach einem der Ansprüche 1 bis 11, bei dem ein Korrekturwert ($k_1$, $k_2$) durch einen Maximalwert und/oder Minimalwert begrenzt wird.

**13.** Verfahren nach einem der Ansprüche 1 bis 12, bei dem die Sollverzögerung ($a_{soll}$) einer Bremse (R, F) ausschließlich in dem Geschwindigkeitsbereich in dem ein Korrekturwert ($k_1$, $k_2$) ermittelt wird, mit dem Korrekturwert ($k_1$, $k_2$) und in den Randbereichen des Geschwindigkeitsbereiches mit einer sich dem Korrekturwert ($k_1$, $k_2$) geschwindigkeitbereichswärts annähernden Rampenfunktion des Korrekturwertes ($k_1$, $k_2$) beaufschlagt wird.

**14.** Bremssystem eines Kraftfahrzeuges mit einer Anzahl von Bremsen (R, F), insbesondere mit einer Anzahl von Reibbremse (F) und einer elektrisch-regenerativen Bremse (R), das eine Steuereinheit aufweist, wobei das Bremssystem über die Steuereinheit mit einem Verfahren nach einem der Ansprüche 1 bis 13 steuerbar ist.

**Claims**

**1.** Method for controlling a braking system of a motor vehicle which has an electric generator (R) and a number of friction brakes (F) which are assigned to axles of the motor vehicle and whose overall deceleration is composed of deceleration components of the electric generator (R) and the friction brakes (F), wherein the ratio of the setpoint deceleration components of a number of brakes (R, F) to one another is changed by means of a control device in that a correction value ($k_1$, $k_2$) for a number of the brakes is determined from the efficiency levels w of a number of brakes which represent the ratio of actual deceleration ($\alpha_{act}$) to setpoint deceleration ($\alpha_{setp}$) which correction value ($k_1$, $k_2$) is applied to the setpoint deceleration ($\alpha_{setp}$) of these brakes, **characterized in that** in each case a correction value ($k_1$, $k_2$) for brakes, in particular friction brakes (F) is determined and is assigned in each case to a common axle, wherein the correction value (k) is applied to the setpoint deceleration ($\alpha_{setp}$) of a number of brakes (R, F) **in that** the setpoint deceleration ($\alpha_{setp}$) is multiplied or divided by said correction value (k).

2. Method according to Claim 1, in which the efficiency level (w) of a brake, in particular the efficiency level (w) of an electric generator (R), is used as a reference for the determination of a correction value ($k_1$, $k_2$) for a number of other brakes (F).

3. Method according to Claim 2, wherein the efficiency level ($w_R$) of an electric generator (R) is used as a reference for the determination of a correction value ($k_1$, $k_2$) for a number of friction brakes (F) which are assigned to a common axle.

4. Method according to one of Claims 1 to 3, in which a correction value ($k_1$, $k_2$) corresponds to the long-term efficiency level ratio of a number of brakes (R, F).

5. Method according to one of Claims 1 to 4, in which a correction value ($k_1$, $k_2$) is determined from filtering measurements of the efficiency level ratio ($k_{s1}$, $k_{s2}$) of a number of brakes (R, F).

6. Method according to one of Claims 1 to 5, in which an efficiency level ratio ($k_{s1}$, $k_{s2}$) of a number of brakes (R, F) is measured in a predefined speed range and/or a predefined deceleration range.

7. Method according to one of Claims 1 to 6, in which an efficiency level ratio ($k_{s1}$, $k_{s2}$) of a number of brakes is determined at precisely one activation of the brakes, and the braking operation has a number of measurement phases (I, II, III), wherein the deceleration component of the overall deceleration of in each case a number of brakes lies in, in each case, one measuring phase over a predefined minimum component.

8.

Method according to one of Claims 1 to 7, in which an efficiency level ratio of a first axle $\left(k_{s1} = \dfrac{w_{F1}}{w_R}\right)$ and an efficiency level ratio $\left(k_{s2} = \dfrac{w_{F2}}{w_R}\right)$ of a second axle are calculated by calculating the efficiency levels ($w_R$, $w_{F1}$, $w_{F2}$) from the equation system

$$\alpha_{act}^{I} = w_R \cdot \alpha_{setp,R}^{I} + w_{F1} \cdot \alpha_{setp,F1}^{I} + w_{F2} \cdot \alpha_{setp,F2}^{I} ,$$

$$\alpha_{act}^{II} = w_R \cdot \alpha_{setp,R}^{II} + w_{F1} \cdot \alpha_{setp,F1}^{II} + w_{F2} \cdot \alpha_{setp,F2}^{II} ,$$

$$\alpha_{act}^{III} = w_R \cdot \alpha_{setp,R}^{III} + w_{F1} \cdot \alpha_{setp,F1}^{III} + w_{F2} \cdot \alpha_{setp,F2}^{III}$$

where

$\alpha_{act}$ corresponds to the actual deceleration of the brake system,

$\alpha_{setp,R}$ corresponds to the setpoint deceleration ($\alpha_{setp}$) of the electric generator (R),

$\alpha_{setp,F1}$ corresponds to the setpoint deceleration ($\alpha_{setp}$) of the friction brakes (F) of the first axle,

$\alpha_{setp,F2}$ corresponds to the setpoint deceleration ($\alpha_{setp}$) of the friction brakes (F) of the second axle,

$w_{F1}$ corresponds to the efficiency level of the friction brakes (F) of the first axle,

$w_{F2}$ corresponds to the efficiency level of the friction brakes (F) of the second axle, and

$w_R$ corresponds to the efficiency level of the electric generator (R)

during the measurement phases I, II and III, and the electric generator (R) is connected to the first or the second axle.

9. Method according to Claims 7 and 8, in which, in a first measurement phase (I) the minimum component of the electric generator (R) is approximately 0.95, in a second measurement phase (II) the minimum component of the friction brakes (F) of the second axle is 0.15, and the deceleration component of the friction brakes (F) of the first axle is at maximum approximately 0.05, and in a third measurement phase (III) the minimum component of the friction brakes (F) of the first axle is approximately 0.5, wherein the electric generator (R) is connected to the first axle.

10. Method according to one of Claims 1 to 9, in which, after each measurement of the efficiency level ratio ($k_{s1}$, $k_{s2}$), a correction value ($k_1$, $k_2$) is corrected by a percentage component in the direction of the measured efficiency level ratio ($k_{s1}$, $k_{s2}$) .

11. Method according to one of Claims 1 to 10, in which a number of correction values ($k_1$, $k_2$) are stored in the control unit of the brake system.

12. Method according to one of Claims 1 to 11, in which a correction value ($k_1$, $k_2$) is bounded by a maximum value and/or minimum value.

13. Method according to one of Claims 1 to 12, in which the correction value ($k_1$, $k_2$) is applied to the setpoint deceleration ($\alpha_{setp}$) of a brake (R, F) exclusively in the speed range in which a correction value ($k_1$, $k_2$) is determined, and in the peripheral regions of the speed range a ramp function of the correction value ($k_1$, $k_2$) which approaches the correction value ($k_1$, $k_2$) in the direction of the speed range is applied to the setpoint deceleration ($\alpha_{setp}$).

14. Brake system of a motor vehicle having a number of brakes (R, F), in particular having a number of friction brakes (F) and an electric-regenerative brake (R), which brake system has a control unit, wherein the brake system can be controlled by means of the control unit with a method according to one of Claims 1 to 13.

**Revendications**

1. Procédé de commande d'un système de freinage d'un véhicule automobile, lequel présente un générateur électrique (R) et une pluralité de freins à friction (F) qui sont associés aux essieux du véhicule automobile, et dont le ralentissement total se compose des parts de ralentissement du générateur électrique (R) et des freins à friction (F), le rapport des parts de ralentissement de consigne d'une pluralité de freins (R, F) entre elles étant modifié par le biais d'un dispositif de commande en déterminant, à partir des taux de rendement w d'une pluralité de freins qui représente le rapport entre le ralentissement réel ($a_{ist}$) et le ralentissement de consigne ($a_{soll}$), une valeur de correction ($k_1$, $k_2$) pour une pluralité de freins, laquelle est appliquée au ralentissement de consigne ($a_{soll}$) de ces freins, **caractérisé en ce qu'**une valeur de correction ($k_1$, $k_2$) est à chaque fois déterminée pour les freins, notamment pour les freins à friction (F) qui sont à chaque fois associés à un essieu commun, la valeur de correction (k) étant appliquée au ralentissement de consigne ($a_{soll}$) d'une pluralité de freins (R, F) en multipliant ou en divisant le ralentissement de consigne ($a_{soll}$) par celle-ci.

2. Procédé selon la revendication 1, selon lequel le taux de rendement (w) d'un frein, notamment le taux de rendement (w) d'un générateur électrique (R), est utilisé comme référence pour la détermination d'une valeur de correction ($k_1$, $k_2$) pour une pluralité d'autres freins (F).

3. Procédé selon la revendication 2, selon lequel le taux de rendement ($w_R$) d'un générateur électrique (R) est utilisé comme référence pour la détermination d'une valeur de correction ($k_1$, $k_2$) pour une pluralité de freins à friction (F) qui sont associés à un essieu commun.

4. Procédé selon l'une des revendications 1 à 3, selon lequel la valeur de correction ($k_1$, $k_2$) correspond au rapport de taux de rendement à long terme d'une pluralité de freins (R, F).

5. Procédé selon l'une des revendications 1 à 4, selon lequel une valeur de correction ($k_1$, $k_2$) est déterminée à partir d'un filtrage des mesures du rapport de taux de rendement ($k_{s1}$, $k_{s2}$) d'une pluralité de freins (R, F).

6. Procédé selon l'une des revendications 1 à 5, selon lequel le rapport de taux de rendement ($k_{s1}$, $k_{s2}$) d'une pluralité de freins (R, F) est mesuré dans une plage de vitesses prédéfinie et/ou une plage de ralentissement prédéfinie.

7. Procédé selon l'une des revendications 1 à 6, selon lequel le rapport de taux de rendement ($k_{s1}$, $k_{s2}$) d'une pluralité de freins est déterminé avec précisément un actionnement des freins et l'opération de freinage présente une pluralité de phases de mesure (I, II, III), la part de ralentissement du ralentissement total d'une pluralité de freins correspondant se trouvant à chaque fois dans une phase de mesure au-dessus d'une part minimale prédéfinie.

8. Procédé selon l'une des revendications 1 à 7, selon lequel un rapport de taux de rendement d'un premier essieu ($k_{s1} = w_{F1}/w_R$) et un rapport de taux de rendement d'un deuxième essieu ($k_{s2} = w_{F2}/w_R$) sont calculés en calculant les taux de rendement ($w_R$, $w_{F1}$, $w_{F2}$) à partir du système d'équation

$$a^I_{ist} = w_R \cdot a^I_{soll,R} + w_{F1} \cdot a^I_{soll,F1} + w_{F2} \cdot a^I_{soll,F2},$$

$$a^{II}_{ist} = w_R \cdot a^{II}_{soll,R} + w_{F1} \cdot a^{II}_{soll,F1} + w_{F2} \cdot a^{II}_{soll,F2},$$

$$a^{III}_{ist} = w_R \cdot a^{III}_{soll,R} + w_{F1} \cdot a^{III}_{soll,F1} + w_{F2} \cdot a^{III}_{soll,F2},$$

où
$a_{ist}$ correspond au ralentissement réel du système de freinage,
$a_{soll,R}$ correspond au ralentissement de consigne ($a_{soll}$) du générateur électrique (R),
$a_{soll,F1}$ correspond au ralentissement de consigne ($a_{soll}$) des freins à friction (F) du premier essieu, $a_{soll,F2}$ correspond au ralentissement de consigne ($a_{soll}$) des freins à friction (F) du deuxième essieu,
$w_{F1}$ correspond au taux de rendement des freins à friction (F) du premier essieu,
$w_{F2}$ correspond au taux de rendement des freins à friction (F) du deuxième essieu,
$w_R$ correspond au taux de rendement du générateur électrique (R),
aux phases de mesure I, II et III et le générateur électrique (R) est relié avec le premier ou le deuxième essieu.

9. Procédé selon les revendications 7 et 8, selon lequel, dans une première phase de mesure (I), la part minimale du générateur électrique (R) est d'environ 0,95, dans une deuxième phase de mesure (II), la part minimale des freins à friction (F) du deuxième essieu est de 0,15 et la part de ralentissement des freins à friction (F) du premier essieu est au maximum d'environ 0,05 et, dans une troisième phase de mesure (III), la part minimale des freins à friction (F) du premier essieu est d'environ 0,5, le générateur électrique (R) étant relié avec le premier essieu.

10. Procédé selon l'une des revendications 1 à 9, selon lequel la valeur de correction ($k_1$, $k_2$) est corrigée après chaque mesure du rapport de taux de rendement ($k_{s1}$, $k_{s2}$) d'une part en pourcentage en direction du rapport de taux de rendement ($k_{s1}$, $k_{s2}$) mesuré.

11. Procédé selon l'une des revendications 1 à 10, selon lequel une pluralité de valeurs de correction ($k_1$, $k_2$) sont mises en mémoire dans l'unité de commande du système de freinage.

12. Procédé selon l'une des revendications 1 à 11, selon lequel une valeur de correction ($k_1$, $k_2$) est limitée par une valeur maximale et/ou une valeur minimale.

13. Procédé selon l'une des revendications 1 à 12, selon lequel la valeur de correction ($k_1$, $k_2$) est appliquée au ralentissement de consigne ($a_{soll}$) d'un frein (R, F) exclusivement dans la plage de vitesses dans laquelle une valeur de correction ($k_1$, $k_2$) est déterminée et, dans les plages limites de la plage de vitesse, y est appliquée une fonction de rampe de la valeur de correction ($k_1$, $k_2$) qui se rapproche de la valeur de correction ($k_1$, $k_2$) en direction de la plage de vitesses.

14. Système de freinage d'un véhicule automobile comprenant une pluralité de freins (R, F), comprenant notamment une pluralité de freins à friction (F) et un frein électro-régénératif (R) qui présente une unité de commande, le système de freinage pouvant être commandé par le biais de l'unité de commande avec un procédé selon l'une des revendications 1 à 13.

Fig. 1

EP 1 843 925 B1

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5632534 A